# FASCICULE DE BREVET EUROPEEN

(11) **EP 2 504 624 B1**
(45) Date de publication et mention de la délivrance du brevet: **10.10.2018**
(21) Numéro de dépôt: 10782302.3
(22) Date de dépôt: 25.11.2010
(51) Int. Cl.: F23G 5/08, H05H 1/30, F23L 7/00, F23G 5/02, F23G 5/14

(54) **PROCÉDÉ ET DISPOSITIF DE DESTRUCTION THERMIQUE DE COMPOSÉS ORGANIQUES PAR UN PLASMA D'INDUCTION**
VERFAHREN UND VORRICHTUNG ZUR THERMISCHEN ZERSTÖRUNG VON ORGANISCHEN VERBINDUNGEN MIT EINEM INDUKTIONSPLASMA
METHOD AND DEVICE FOR THE THERMAL DESTRUCTION OF ORGANIC COMPOUNDS BY MEANS OF AN INDUCTION PLASMA

(30) Priorité: 27.11.2009 FR 0958451
(43) Date de publication de la demande: 03.10.2012
(73) Titulaire: Commissariat à l'Énergie Atomique et aux Énergies Alternatives, 75015 Paris (FR)
(72) Inventeur: LEMONT, Florent, F-30400 Villeneuve-les-Avignon (FR); POIZOT, Karine, F-30130 Pont-Saint-Esprit (FR)
(74) Mandataire: Ilgart, Jean-Christophe
(86) Numéro de dépôt international: PCT/EP2010/068254
(87) Numéro de publication internationale: WO 2011/064314

(56) Documents cités:
- DE-A1- 10 061 828
- FR-A1- 2 541 428
- FR-A1- 2 764 163
- FR-A1- 2 866 414
- US-A1- 2007 266 633

## Description

### DOMAINE TECHNIQUE

La présente invention concerne un procédé et un dispositif de destruction thermique de composés organiques par un plasma d'induction.

Plus précisément, l'invention concerne un procédé et un dispositif de destruction thermique d'une charge, comprenant au moins un composé organique par au moins un plasma d'induction formé par au moins un gaz plasmagène ionisé par un inducteur ou spire inductive.

La charge peut être constituée par des déchets et elle peut se trouver notamment sous forme liquide, gazeuse ou pulvérulente, il peut s'agir en particulier d'une charge radioactive.

Les composés organiques peuvent être des composés nocifs, toxiques ou dangereux tels que des hydrocarbures ou des produits organochlorés.

Le domaine technique de l'invention peut, de manière générale, être défini comme celui de la destruction des déchets par un traitement thermique, et plus particulièrement comme celui de la destruction des déchets par un plasma d'induction.

### ÉTAT DE LA TECHNIQUE ANTÉRIEURE

Depuis une dizaine d'années se pose de façon cruciale le problème du traitement des déchets. En effet, la majorité des déchets était, dans le passé, simplement déposée dans des décharges, et l'on ne réalisait donc pas de véritable gestion de ces déchets.

Mais à présent, les changements de nature et de quantité des déchets ont conduit à adopter une approche industrielle pour effectuer leur traitement.

De nombreuses technologies sont ainsi mises en oeuvre pour traiter les déchets afin que le développement puisse se poursuivre sans nuire à l'environnement. Ces technologies performantes de destruction de déchets ont en commun de comprendre à la fois un procédé de destruction des déchets, des traitements des fumées produites lors de cette destruction et une gestion des résidus liquides ou solides éventuels obtenus.

Généralement, on utilise des procédés thermiques de destruction des déchets pour surmonter le problème posé par la stabilité de nombreux composés chimiques. Ainsi, les installations de destruction de produits dangereux sont traditionnellement des incinérateurs, dans lesquels, par exemple, les produits liquides sont mélangés à des produits solides en vue d'être brûlés.

Cependant en incinérant les déchets, on obtient des résidus volatils qu'il est encore nécessaire d'éliminer.

Par ailleurs, ces installations nécessitent des volumes conséquents pour permettre des réactions complètes entre le carburant et le comburant et diminuer les coûts d'exploitation.

Pour remédier à ces inconvénients, de nombreux procédés de destruction de déchets utilisent des technologies plasma. En effet, les procédés mettant en oeuvre un plasma ont l'avantage de permettre de réduire la taille des installations nécessaires car les incinérateurs plasma permettent d'atteindre de très hautes températures et par conséquent, d'accélérer les réactions chimiques de destruction des déchets et de recombinaison des éléments chimiques ainsi obtenus.

Dans le document **[1],** on s'applique à détruire des produits organiques à l'aide d'un plasma en arc soufflé. Les gaz provenant de la combustion des déchets sont mélangés avec de l'air, de l'eau ou de l'oxygène à la sortie de la torche plasma dans un étage tubulaire segmenté. Cette technique permet la destruction de déchets gazeux de façon aisée par mélange des déchets avec le gaz plasma issu de la torche à arc. Néanmoins, l'efficacité du procédé est diminuée du fait que les charges à détruire ne passent pas dans la torche. La destruction de produits liquides s'avère plus compliquée car il est difficile de mélanger de façon homogène une phase liquide dans une phase gazeuse à haute température et à haute vitesse issue d'une torche plasma à arc soufflé. Cette difficulté diminue encore le rendement thermique et l'efficacité du procédé.

Un autre exemple d'utilisation de plasmas en arc soufflé est présenté dans les documents **[2]** et **[3].** Les déchets à détruire sont introduits dans une torche tubulaire à plasma en arc soufflé après qu'ils aient subi un changement d'état en phase gazeuse à l'aide d'un brûleur initial.

Dans la technique exposée dans le document **[2],** le fait de vaporiser la charge pour la faire passer dans la torche plasma permet à la fois d'augmenter l'efficacité de destruction du procédé et complique considérablement le procédé, car il impose une surveillance constante de la bonne vaporisation de la charge. L'ajout d'un brûleur à gaz, qui nécessite un apport d'air important pour fonctionner correctement, conduit à un débit gazeux important dans lequel la proportion massique de la charge est réduite.

Le procédé décrit dans le document **[3]** permet d'introduire la charge à détruire, qu'elle soit liquide ou gazeuse, directement dans la torche plasma. Ce procédé utilise la technologie de stabilisation de l'arc électrique dans la torche par un champ électromagnétique. Ce procédé étant un grand consommateur d'énergie électrique, il est réservé à la destruction de produits présents en très grande quantité. De plus, il n'est pas fait mention du type de gaz utilisé pour le fonctionnement de la torche ou pour le contrôle des recombinaisons atomiques. Ainsi, ce procédé effectue une destruction des produits par pyrolyse, c'est-à-dire sans apport d'oxygène, ce qui conduit à obtenir des gaz fortement réducteurs qui doivent être brûlés en sortie de la torche avant rejet dans l'atmosphère.

Dans le document **[4],** les déchets sont mélangés à de l'eau ou à du méthanol et sont introduits dans une torche tubulaire à arc. De l'oxygène, à la place de l'air, est également employé comme gaz plasma. Le but de ces modifications est d'améliorer le rendement de destruction des déchets. Dans ce document, on utilise une torche segmentée tubulaire à arc. Il s'agit là d'une technologie relativement peu courante qui nécessite une bonne connaissance de la technologie plasma afin de définir des paramètres de fonctionnement stables. La mise en oeuvre de deux phases, liquide et gazeuse, dans ce type de technologie ne facilite pas l'établissement d'un fonctionnement stable.

Dans le document **[5],** on utilise un brûleur plasma pour purifier et dépolluer les gaz sortant d'un incinérateur classique. On réalise ainsi une postcombustion à haute température avec injection d'air dans la chambre de mélange avec les produits gazeux à neutraliser. De nouveau, avec ce procédé, la torche plasma est utilisée comme vecteur énergétique d'appoint pour purifier des gaz. Il n'est donc pas possible de traiter des liquides directement sans les avoir au préalable vaporisés dans un incinérateur classique par exemple.

Par ailleurs, le fait de ne pas introduire la charge au sein de la torche, pour des raisons d'incompatibilité de matériau, diminue fortement l'efficacité du procédé.

On peut également utiliser des plasmas radiofréquences ou hautes fréquences. Par exemple, dans le document **[6],** les produits solides à détruire sont d'abord introduits dans un four tournant pour y être transformés sous forme gazeuse. Le flux gazeux est ensuite dirigé vers un collecteur où il est mélangé avec un gaz porteur et éventuellement avec des déchets liquides. Ce mélange est ensuite introduit dans une torche plasma haute fréquence. Les produits issus de la torche passent ensuite dans une centrifugeuse munie d'un système torique pour générer des champs électriques et magnétiques. Ce système permet alors de séparer les différents éléments.

Cette technique a comme vocation première la séparation des différents constituants de charges avec une récupération éventuelle de produits valorisables tels que les éléments lourds.

La torche présente une géométrie particulière dans laquelle sont introduites les charges via un collecteur non défini. Les températures des champs atteintes qui sont de 300 à 1000°C ne permettent pas une destruction au sens strict du terme mais plutôt une mise en condition pour une séparation des différents éléments.

Le document **[7]** concerne la destruction de produits toxiques gazeux d'origine militaire au moyen d'une torche plasma fonctionnant sous mélange d'air/argon.

A la sortie de la torche, une trempe air/eau est introduite afin de stopper les réactions. Les charges à détruire passent soit dans un module d'inertage, soit dans le module à plasma. Ainsi, il apparaît que ce sont principalement les gaz qui sont dirigés vers le module à plasma. L'introduction de liquide ne constitue qu'une éventualité suivant la composition de la charge.

La plupart des procédés de destruction de déchets décrits plus haut mettent en oeuvre des torches à plasma d'arc qui sont disposées dans des réacteurs spécifiques et dont le rendement de destruction des déchets est insuffisant.

C'est la raison pour laquelle, afin d'améliorer sensiblement ces rendements de destruction, a été développé un procédé dans lequel un composé organique ou organohalogéné liquide ou pulvérulent à détruire est mélangé avec de l'eau et introduit avec un gaz plasmagène au coeur d'une torche à plasma inductive. En d'autres termes, ce procédé repose sur l'utilisation d'une torche à plasma d'induction au sein de laquelle est introduite la charge de composés à détruire. Ce procédé assure la destruction de la charge par une introduction d'eau qui est pulvérisée dans le plasma avec les composés à détruire.

Ce procédé est décrit dans le document FR-A1-2 866 414 **[8]** et le dispositif pour sa mise en oeuvre est illustré sur la Figure 1.

Ce dispositif comprend une torche à plasma d'induction alimentée par un gaz plasmagène (1) ionisé à l'aide d'un inducteur (2) pour former ainsi un plasma (3) .

Cette torche est équipée en amont par un système d'introduction (4) de la charge à traiter. Afin d'assurer une destruction conforme de la charge, de l'eau est mélangée à la charge introduite (5).

La dissociation de l'eau à très haute température assure d'une part l'apport en oxygène nécessaire pour oxyder les espèces organiques ou organohalogénées et, d'autre part, un apport d'hydrogène nécessaire à la formation de HCl.

La première revendication du document [8] indique à ce propos que le produit organique est mélangé avec de l'eau en quantité suffisante pour au moins satisfaire les rapports stoechiométriques entre les atomes de carbone et d'oxygène du mélange, ou que le produit organohalogéné est mélangé avec de l'eau en quantité suffisante pour au moins satisfaire les rapports stoechiométriques entre les atomes de carbone et d'oxygène du mélange d'une part, et entre les atomes d'hydrogène et d'halogène du mélange, d'autre part.

En effet, un défaut d'hydrogène dans le milieu peut être à l'origine de la production de molécules indésirables telles que le phosgène COCl₂. Le plasma (3) génère de nombreuses espèces ioniques très réactives qui assurent la destruction des composés organiques. Ces réactions de destruction se produisent dans le réacteur (6) qui est maintenu à très haute température grâce à des matériaux réfractaires (7) qui tapissent ses parois internes (8).

Une introduction d'air et/ou d'oxygène (9, 10) en bas du réacteur et au niveau d'un venturi (11) assure un brassage important des gaz et un apport supplémentaire en oxygène.

Ensuite, les gaz sont rapidement refroidis avant leur entrée dans une zone de recombinaison (12) dans laquelle les dernières réactions se produisent.

Les gaz sont ensuite dirigés (13) vers un traitement consistant notamment en une neutralisation des espèces acides.

Une installation pilote a été mise en place afin de tester l'efficacité du procédé décrit dans le document [8]. La puissance du générateur plasma est de 4,5 kW pour une puissance utile dans le plasma de 1 à 1,5 kW.

Si la dégradation des produits est très satisfaisante, l'efficacité énergétique du procédé peut être qualifiée de moyenne voire médiocre, à cause de la quantité importante d'eau à chauffer et à volatiliser.

Deux molécules de référence, prises pour exemple, ont été traitées dans l'installation pilote dans laquelle elles ont été alimentées chacune à un débit de 100 g/h:
- le trichlorométhane ou chloroforme de formule CHCl₃,
- le chlorobenzène de formule C₆H₅Cl.

Le traitement du chloroforme requiert une alimentation en eau au minimum d'environ 30 g/h pour un bilan thermique de traitement d'environ 100 W. La puissance disponible dans la torche est ainsi largement suffisante pour assurer le traitement complet du solvant.

Le traitement du chlorobenzène requiert une alimentation en eau au minimum d'environ 200 g/h pour un bilan thermique de traitement d'environ 550 W. Si la puissance dans le plasma est encore suffisante, la marge disponible est plus limitée. Si la quantité d'eau est portée à 2 fois la stoechiométrie pour sécuriser, garantir le traitement, le bilan thermique s'élève à près de 900W ce qui réduit la marge énergétique à presque 0.

Sachant que pour des raisons de rendement réactionnel, il est raisonnable de travailler avec au moins une double stoechiométrie en eau, le rendement énergétique est largement diminué.

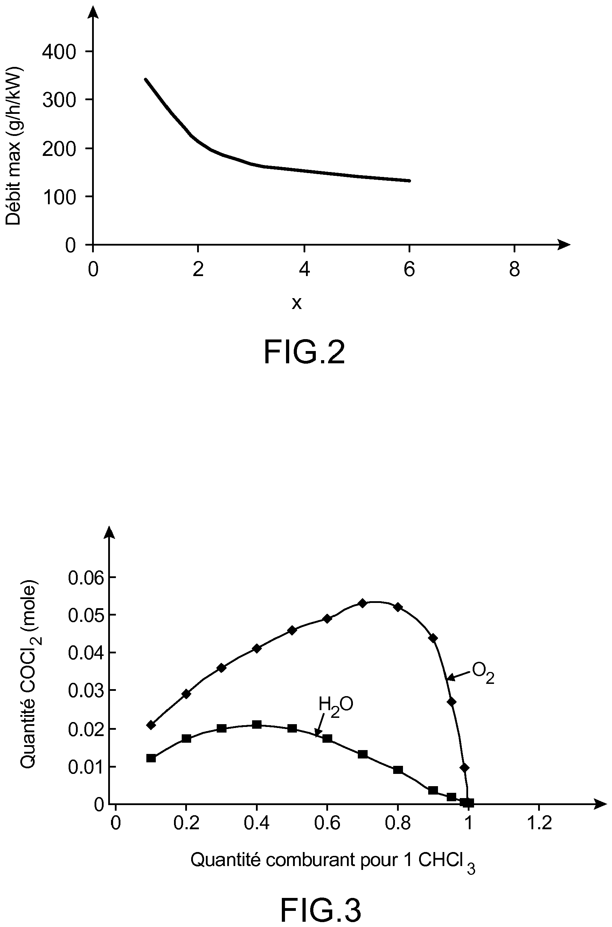

A titre d'illustration, la figure 2 représente l'évolution du débit maximal de traitement d'un solvant chloré aliphatique CxHyCl par kW disponible dans le plasma.

Il est à noter que les calculs ont été réalisés avec des solvants comprenant des chaînes aliphatiques avec un seul atome de chlore (z=1). Mais les conclusions seraient identiques avec un nombre d'atomes de chlore z différent de 1.

Il apparaît que ce débit diminue sensiblement avec le nombre d'atomes de carbone x, ce qui rend le procédé moyennement ou peu attractif pour une application industrielle à grande échelle.

Il ressort donc de ce qui précède, que le procédé et le dispositif qui sont décrits dans le document [8] présentent certains inconvénients qui sont notamment les suivants :
- un rendement énergétique insuffisant du procédé ;
- un taux de charge limité ;
- la mise en oeuvre d'un gaz plasmagène couteux tel que l'argon qui rend le procédé peu intéressant dans le cadre d'une application industrielle ;
- des difficultés pour traiter et détruire des composés non miscibles à l'eau.

Il existe donc un besoin pour un procédé et un dispositif de destruction d'une charge comprenant au moins un composé organique par au moins un plasma d'induction formé par au moins un gaz plasmagène ionisé par un inducteur, qui ne présentent pas les inconvénients du procédé et du dispositif décrits dans le document [8].

Le but de la présente invention est, entre autres, de fournir un procédé et un dispositif de destruction d'une charge comprenant au moins un composé organique par au moins un plasma d'induction formé par au moins un gaz plasmagène ionisé par un inducteur qui répondent entre autres à ce besoin.

Le but de la présente invention est encore de fournir un tel procédé et un tel dispositif qui ne présentent pas les inconvénients, défauts, limitations et désavantages des procédés et dispositifs de l'art antérieur tels que le procédé et le dispositif décrits dans le document [8].

### EXPOSÉ DE L'INVENTION

Ce but, et d'autres encore, sont atteints, conformément à l'invention, par un procédé de destruction thermique d'au moins une charge comprenant au moins un composé organique par au moins un plasma d'induction formé par au moins un gaz plasmagène ionisé par un inducteur, dans lequel on réalise les étapes successives suivantes :
a) on introduit ladite charge dans le plasma, et on réalise un apport d'oxygène gazeux dans le au moins un gaz plasmagène, et/ou dans le plasma ou au voisinage du plasma, moyennant quoi on obtient des gaz dans lesquels une décomposition en éléments atomiques a été induite ;
b) on réalise, dans une enceinte de réaction, une première opération de destruction thermique desdits gaz dans lesquels une décomposition en éléments atomiques a été induite ;
c) on réalise une deuxième opération de destruction thermique des gaz ayant subi la première opération de destruction thermique par brassage desdits gaz avec de l'air et/ou de l'oxygène ;
d) on réalise une recombinaison par refroidissement d'au moins une partie des gaz issus du brassage ;
e) on rejette les gaz.

Avantageusement, l'apport d'oxygène gazeux peut être réalisé en utilisant de l'oxygène pur en tant que seul gaz plasmagène.

En d'autres termes, le(s) gaz plasmagène(s) est (sont) alors constitué(s) par de l'oxygène pur.

Il n'est alors généralement pas nécessaire de réaliser un apport d'oxygène gazeux d'une autre manière, par exemple en amenant de l'oxygène gazeux dans le plasma ou au voisinage du plasma.

Si le ou les gaz plasmagène (s) n'est (ne sont) pas constitué(s) par de l'oxygène, ne comprend (comprennent) pas d'oxygène, ou comprend (comprennent) peu d'oxygène, l'apport d'oxygène gazeux peut être alors réalisé en amenant de l'oxygène gazeux dans le plasma (déjà formé) ou au voisinage du plasma (déjà formé).

Par plasma, on entend le plasma déjà formé, déjà constitué. Le plasma déjà formé, déjà constitué ne doit pas être confondu avec le(s) gaz plasmagène(s).

Par gaz plasmagène(s) comprenant peu d'oxygène, on entend généralement que la quantité d'oxygène dans le(s) gaz plasmagène(s) n'est pas suffisante pour que la décomposition en éléments atomiques et les première et seconde opérations de destruction thermique se déroulent dans des conditions satisfaisantes.

Avantageusement, lorsque le ou les gaz plasmagène(s) n'est (ne sont) pas constitué(s) par de l'oxygène, ne comprend (comprennent) pas d'oxygène ou comprend (comprennent) peu d'oxygène, l'apport d'oxygène gazeux peut être réalisé en introduisant l'oxygène gazeux dans le plasma à un emplacement identique ou proche de l'emplacement où est introduite la charge et simultanément à celle-ci.

Avantageusement, le rapport en mole de l'oxygène gazeux apporté au(x) composé(s) organique(s) est supérieur au rapport stoechiométrique de combustion.

Avantageusement, dans l'étape c), le brassage peut être réalisé par un dispositif venturi dans lequel est injecté de l'air et/ou de l'oxygène gazeux.

De manière générale, de l'air et/ou de l'oxygène gazeux est systématiquement injecté au niveau du brassage et il y a un refroidissement au niveau du brassage.

Ou bien, notamment mais pas seulement, dans le cas où la charge contient en outre au moins une charge minérale, dans l'étape c), le brassage peut être réalisé par une couronne de distribution d'air et/ou d'oxygène qui injecte de l'air et/ou de l'oxygène gazeux vers l'axe principal de l'enceinte de réaction.

Avantageusement, à l'issue de l'étape d), peut être prévue au moins une étape d1) de traitement chimique des gaz.

Avantageusement, ladite au moins une étape d1) de traitement chimique des gaz est choisie parmi une étape de déshalogénisation ou neutralisation, une étape de désoxydation des oxydes d'azote et une étape de désulfuration.

Avantageusement, lorsque la charge contient en outre au moins une charge minérale, une étape de filtration des gaz, peut être est prévue après l'étape d) et avant l'étape d1).

Avantageusement à l'issue de l'étape de traitement chimique des gaz d1), les gaz peuvent être traités dans un condenseur dévésiculeur.

Avantageusement, plusieurs charges identiques ou différentes peuvent être traitées par plusieurs plasmas.

Le procédé selon l'invention peut être défini comme une modification ou plutôt comme une amélioration du procédé décrit dans le document [8].

Selon l'invention, le procédé du document [8] a été modifié pour mettre en oeuvre en tant que comburant de l'oxygène en lieu et place de l'eau.

En d'autres termes, la modification du procédé du document [8] qui fait l'objet de la présente invention consiste principalement à adapter le procédé du document [8] pour qu'il fonctionne uniquement avec de l'oxygène pur en tant que gaz plasmagène qui a alors la double fonction de gaz plasmagène et de gaz comburant; ou bien avec un gaz plasmagène ne comprenant pas ou peu d'oxygène et avec un apport d'oxygène.

Autrement dit, selon l'invention seule la charge est introduite dans le plasma, et la charge n'est pas mélangée avec de l'eau préalablement à son introduction dans le plasma, comme c'est le cas dans le document [8].

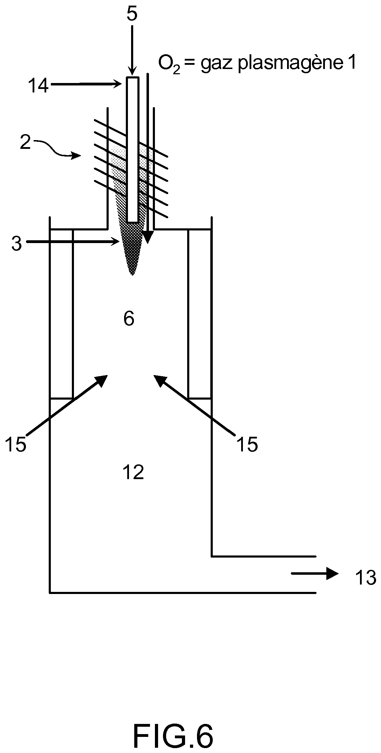

Dans le procédé selon l'invention, la destruction des composés organiques est assurée par une introduction, arrivée, amenée, apport d'oxygène gazeux. Cette introduction peut être assurée idéalement par le plasma, dans le cas où de l'oxygène pur est utilisé comme seul gaz plasmagène (voir Figure 6).

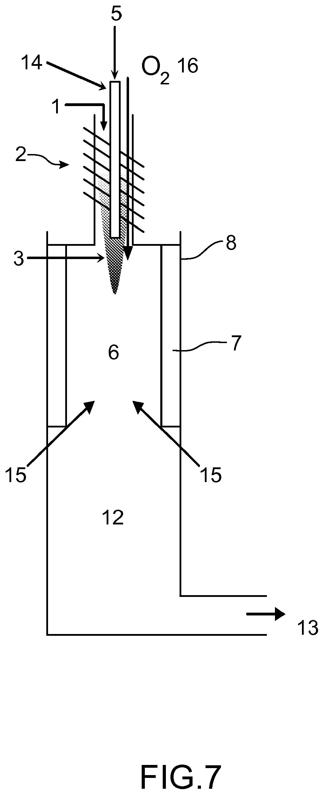

Ou bien cette introduction d'oxygène peut être assurée par l'intermédiaire d'une arrivée annexe, le plasma étant alors constitué par un ou plusieurs autres gaz ne comprenant pas d'oxygène ou comprenant peu d'oxygène (voir Figure 7).

Le procédé selon l'invention comporte une suite d'étapes spécifiques qui n'a jamais été décrite ni suggérée dans l'art antérieur.

En particulier, la mise en oeuvre dans un procédé de destruction thermique de déchets utilisant un plasma à induction, de l'oxygène en tant que comburant à la place de l'eau n'a jamais été décrite ni suggérée dans l'art antérieur et notamment dans le document [8] cité plus haut.

Le procédé selon l'invention ne présente pas les inconvénients, défauts, limitations et désavantages des procédés de l'art antérieur et apporte une solution aux problèmes des procédés de l'art antérieur et notamment du procédé du document [8].

Il est tout d'abord à noter que le remplacement de l'eau par de l'oxygène n'a globalement que peu d'impact sur la mise en oeuvre du procédé.

Le procédé selon l'invention peut donc être mis en oeuvre dans des installations existantes prévues pour un fonctionnement avec de l'eau comme gaz comburant, sans qu'il soit nécessaire de modifier profondément ces installations.

Seules de légères adaptations doivent éventuellement être réalisées pour que l'oxygène soit utilisé comme comburant à la place de l'eau.

Plus précisément, si l'on s'intéresse au traitement des composés organohalogénés, on sait que le traitement des produits organohalogénés par de l'eau se justifie pour éviter la formation de composés très toxiques comme le phosgène COCl₂. Ce composé se forme en condition réductrice entre les atomes de chlore et les radicaux CO. Introduire de l'eau impose un certain potentiel d'hydrogène nécessaire à fixer ces atomes de chlore pour produire de l'acide chlorhydrique HCl qui est neutralisé en aval dans une colonne de lavage comme cela est décrit dans le document [8].

Introduire de l'oxygène dans le système, comme c'est le cas dans le procédé selon l'invention, impose des conditions plus oxydantes mais limite les capacités de fixation du chlore.

Une étude réalisée sur la molécule CHCl₃, très chargée en chlore montre que pour le traitement d'une mole de produit, la quantité de COCl₂ formée dépend de la quantité de comburant introduit. En-dessous du ratio 1/1, il apparaît que le phosgène se forme dans les deux cas avec une quantité maximale 3 fois supérieure lors d'un traitement à l'oxygène. Par contre, lorsque le ratio est supérieur à 1/1, le phosgène ne se forme plus. Dans le cas du traitement à l'eau, au-delà de ce ratio, le potentiel d'hydrogène est suffisant pour réagir avec le chlore pour former HCl qui sera neutralisé par la suite. Dans le cas du traitement à l'oxygène, au-delà de ce ratio, le potentiel d'oxygène est suffisant pour gazéifier la totalité du carbone sous forme de CO₂.

La conclusion est que quelque soit le comburant utilisé, le phosgène se forme dans des conditions sous-stoechiométriques. Lorsque la stoechiométrie est dépassée, ce composé toxique disparaît. La figure 3 illustre ce résultat à travers le traitement de 1 mole de chloroforme.

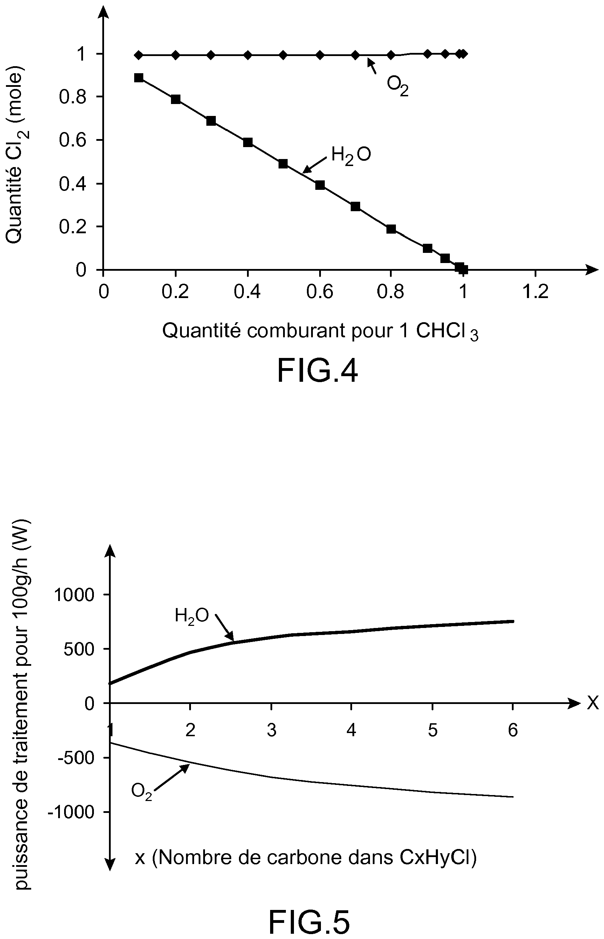

La différence entre les deux modes de fonctionnement réside dans la formation de chlore Cl₂ lors d'un traitement par O₂ comme cela apparaît sur la figure 4. Dans le cas d'un traitement à l'eau, cette quantité est réduite à zéro lorsque le ratio atteint 1/1.

On pourrait penser que, dans le procédé selon l'invention fonctionnant avec de l'oxygène, l'installation pour le traitement des gaz, initialement conçue et dimensionnée pour neutraliser le chlorure d'hydrogène HCl, doit être modifiée et redimensionnée pour assurer la neutralisation du chlore gazeux Cl₂.

Or, il s'avère que ce dernier est facilement neutralisé par une colonne de lavage à la soude en formant du chlorure de sodium et de l'hypochlorite de sodium NaClO. Le système de traitement des gaz initialement en place dans l'installation fonctionnant avec de l'eau n'a donc pas à être modifié. Seule la gestion des effluents en aval devra généralement tenir compte de la présence de cet hypochlorite.

Le procédé selon l'invention présente de nombreux avantages par rapport aux procédés de l'art antérieur, et notamment au procédé du document [8], avantages qui sont notamment liés de manière générale au remplacement de l'eau par de l'oxygène pour assurer la combustion des matières, composés, organiques, que l'oxygène constitue ou non le gaz plasmagène. Ces avantages sont notamment les suivants :
- une amélioration très sensible du rendement énergétique du procédé ;
- la possibilité de traiter tous types de charges et même les charges liquides non miscibles à l'eau ce qui était difficilement possible avec le procédé décrit dans le document [8]. Avec le procédé selon l'invention, de tels liquides peuvent être facilement introduits dans le plasma et traités. La palette des charges qui peuvent être traitées par le procédé selon l'invention est donc très élargie et ne connaît quasiment plus de limitations ;
- une augmentation sensible du taux de charge pour une même taille d'équipement.

Les avantages du procédé selon l'invention sont encore plus nombreux et encore plus notables dans le cas d'un mode de réalisation préféré du procédé selon l'invention où l'on utilise de l'oxygène pur en tant que gaz plasmagène, c'est-à-dire dans le cas où l'on remplace l'eau par de l'oxygène qui sert également de gaz plasmagène. Ces avantages dont certains ont déjà été cités plus haut, sont notamment les suivants :
- tout d'abord, les gaz plasmagènes couramment utilisés sont l'air, l'azote ou l'argon. L'utilisation de l'air ou de l'azote conduit à une production importante d'oxyde d'azote ce qui nécessite la mise en place d'une colonne d'abattement catalytique en aval utilisant généralement de l'ammoniaque. L'utilisation de l'argon est quant à elle coûteuse pour une exploitation industrielle.

L'utilisation dans ce mode de réalisation préféré du procédé selon l'invention, de l'oxygène pur comme gaz plasmagène, sensiblement moins coûteux que l'argon et ne conduisant pas à la production d'oxydes d'azote est une solution de choix car, en plus d'être à la source du plasma, il assure aussi l'apport de l'oxygène nécessaire à la combustion des composés organiques. En d'autres termes, il joue à la fois le rôle de gaz plasmagène et de gaz comburant. Dépourvu d'azote, il évite également la mise en place d'une unité supplémentaire de neutralisation des oxydes correspondant.

En utilisant de l'oxygène pur comme gaz plasmagène, on évite notamment d'utiliser à cette fin de l'argon très coûteux, ce qui a un fort impact sur le coût de fonctionnement du procédé.
- une amélioration de la performance de la destruction des déchets, effluents et une optimisation de la combustion des gaz ;
- la possibilité comme déjà précisé plus haut de traiter des charges liquides non miscibles à l'eau ;
- une augmentation sensible de la capacité de traitement du procédé.

Plus précisément, en « mode eau », c'est-à-dire dans le cas du procédé faisant l'objet du document [8], le procédé est très « énergivore » ce qui limite les débits de traitement.

Par exemple, dans le cas du traitement de composés de la série des hydrocarbures aliphatiques CₓH_{y}Cl, la puissance nécessaire pour traiter un débit de 100 g/h augmente avec le nombre x de carbone. En mode oxygène, la combustion des matières organiques libère de la puissance. Sur la base d'un débit d'alimentation de 100 g/h, cette puissance augmente sensiblement avec le nombre x de carbone.

Les différences entre les deux modes apparaissent sur la figure 5. Dans le second cas, l'échelle négative rend compte d'une production de puissance. Elle est développée par la combustion des solvants et doit être compensée par une augmentation de la température du réacteur et une optimisation de l'évacuation des calories.

Dans le cadre d'une exploitation industrielle à grande échelle, la puissance développée lors du traitement peut être exploitée. Par exemple, une unité de traitement de 50 kg/h d'un composé similaire au chlorohexane développera une puissance proche de 450kW.

L'invention concerne en outre un dispositif de destruction d'au moins une charge comprenant au moins un composé organique par au moins un plasma d'induction formé par au moins un gaz plasmagène ionisé par un inducteur, comprenant :
- au moins une torche plasma inductive ;
- des moyens d'introduction d'au moins un gaz plasmagène dans ladite torche ;
- des moyens pour amener de l'oxygène gazeux dans le plasma ou au voisinage du plasma ;
- des moyens d'introduction de ladite charge dans ladite torche ;
- une enceinte, chambre, de réaction (7) apte à permettre une destruction thermique des gaz sortant de la torche plasma inductive (6) ;
- un dispositif permettant de réaliser un brassage des gaz sortant de l'enceinte, chambre de réaction (7) ;
- des moyens d'introduction d'air et/ou d'oxygène gazeux (9) dans le dispositif de brassage (8) ;
- un dispositif (10) permettant de recombiner par refroidissement au moins une partie des gaz issus du dispositif de brassage (8) ;
la torche plasma inductive (6), l'enceinte, chambre de réaction (7), le dispositif de brassage (8), et le dispositif de recombinaison (10) étant en communication fluidique.

Avantageusement, les moyens d'introduction de la charge dans la torche peuvent être constitués par un tube en un matériau réfractaire dont l'intérieur est garni d'un textile en fibres d'un matériau réfractaire.

Avantageusement, ledit tube en un matériau réfractaire peut comporter en outre en son centre un tube pour amener de l'oxygène gazeux dans le plasma.

Avantageusement, le dispositif permettant de réaliser un brassage de gaz peut être un venturi.

Ou bien, le dispositif permettant de réaliser un brassage de gaz peut être une couronne de distribution qui est apte à injecter de l'air et/ou de l'oxygène vers l'axe principal de l'enceinte de réaction.

Avantageusement, le dispositif permettant de recombiner par refroidissement au moins une partie des gaz issus du dispositif de brassage peut être une enceinte à double paroi refroidie par eau.

Avantageusement, le dispositif peut comprendre en outre, situé en aval du dispositif de recombinaison de gaz dans le sens de circulation des gaz, au moins un dispositif permettant de traiter chimiquement les gaz issus du dispositif de recombinaison.

Avantageusement, le au moins un dispositif permettant de traiter chimiquement les gaz issus du dispositif de recombinaison peut réaliser au moins une réaction choisie parmi une déhalogénisation, une désoxydation des oxydes d'azote et une désulfuration.

Avantageusement, le dispositif peut comprendre en outre des moyens de filtration en aval du dispositif de recombinaison de gaz dans le sens de la circulation des gaz, et en amont du au moins un dispositif permettant de traiter chimiquement les gaz issus du dispositif de recombinaison.

Avantageusement, le dispositif peut comprendre plusieurs torches à plasma.

Avantageusement, le dispositif peut être placé sur un véhicule.

L'invention sera mieux comprise et d'autres avantages de celle-ci apparaîtront à la lecture de la description détaillée qui va suivre, faite à titre illustratif et non limitatif, en référence aux dessins joints dans lesquels :

### BRÈVE DESCRIPTION DES DESSINS

- La Figure 1 est une vue schématique en coupe verticale du dispositif pour la mise en oeuvre du procédé décrit dans le document [8] qui utilise de l'eau en tant que comburant ;
- La Figure 2 est un graphique qui donne le débit maximal de traitement des composés CₓH_{y}Cl avec de l'eau comme comburant. En ordonnée est porté le débit maximal de traitement (en g/h/kW) et en abscisse est porté le nombre d'atomes de carbone x du composé.

- La Figure 3 est un graphique qui montre l'évolution de la formation de phosgène COCl₂ en fonction de la quantité et la nature du comburant utilisé, respectivement eau ou oxygène, lors de la destruction de chloroforme. En ordonné est portée la quantité de COCl₂ formée (en moles), et en abscisse est portée la quantité de comburant pour une mole de chloroforme.
- La Figure 4 est un graphique qui montre l'évolution de la formation de chlore Cl₂ en fonction de la quantité et la nature du comburant utilisé, respectivement eau ou oxygène, lors de la destruction de chloroforme. En ordonné est portée la quantité de Cl₂ formée (en moles), et en abscisse est portée la quantité de comburant pour une mole de chloroforme.
- La Figure 5 est un graphique qui montre la puissance nécessaire au traitement de 100 g/h d'un composé CₓH_{y}Cl en fonction du nombre d'atomes de carbone x du composé respectivement pour les comburants eau et oxygène. En ordonnée est portée la puissance de traitement pour 100 g/h (en W), et en abscisse est portée le nombre d'atomes de carbone x du composé CₓH_{y}Cl.

Une ordonnée positive correspond à une absorption de puissance, et une ordonnée négative correspond à une production de puissance.
- La Figure 6 est une vue schématique en coupe verticale d'un dispositif pour la mise en oeuvre du procédé selon l'invention dans un mode de réalisation où le gaz plasmagène est constitué par de l'oxygène pur.
- La Figure 7 est une vue schématique en coupe verticale d'un dispositif pour la mise en oeuvre du procédé selon l'invention dans un mode de réalisation où le gaz plasmagène ne comprend pas d'oxygène ou peu d'oxygène.
- La Figure 8 est une vue schématique en coupe verticale montrant la structure d'une canne spécifique conçue pour introduire une charge fluide au coeur d'un plasma, et sa mise en oeuvre dans une torche à plasma.
- La Figure 9 est une vue schématique en coupe verticale montrant la structure d'une canne spécifique conçue pour introduire une charge fluide ainsi qu'un gaz comburant, tel que de l'oxygène, au coeur d'un plasma, et sa mise en oeuvre dans une torche à plasma.
- La Figure 10 est une vue schématique en coupe verticale qui représente l'ensemble d'un dispositif pour la mise en oeuvre du procédé selon l'invention.

### EXPOSÉ DÉTAILLÉ DE MODES DE RÉALISATION PARTICULIERS

Précisons tout d'abord que le procédé et le dispositif selon l'invention sont définis comme étant un procédé et un dispositif de destruction thermique d'une charge comprenant au moins un composé organique.

De préférence, la charge est constituée par ledit au moins un composé organique.

Selon l'invention, la charge traitée est généralement une charge fluide, c'est-à-dire qu'elle est sous forme liquide, gazeuse ou pulvérulente (c'est-à-dire que dans ce dernier cas, elle forme une poudre susceptible de s'écouler).

Par composé organique, on entend généralement un composé comprenant, de préférence constitué par, des atomes de carbone et d'hydrogène et éventuellement des atomes choisis parmi les atomes de carbone d'oxygène, d'azote, de soufre, et les atomes d'halogène tels que les atomes de chlore, de brome, d'iode et de fluor.

Le ou les composés organiques à détruire sont généralement des composés organiques toxiques, nocifs ou dangereux par exemple explosifs ; et/ou radioactifs.

Ces composés peuvent être par exemple des solvants organohalogénés, notamment organochlorés, des huiles, des hydrocarbures aromatiques ou aliphatiques, des produits toxiques gazeux tels que les Chlorofluorocarbures CFC ou les Hydrochlorofluorocarbures HCFC, ou encore des gaz de combat, des explosifs solides etc.

Une charge préférée qui peut être traitée par le procédé selon l'invention est une charge liquide radioactive comprenant des composés organiques halogénés dont la structure comporte des traceurs radioactifs comme ¹⁴C ou ³H.

Par destruction, on entend que, à l'issue du procédé, c'est-à-dire généralement dans les gaz rejetés, les composés organiques initialement présents dans la charge et que l'on cherche à éliminer ne sont plus présents ou présents à une teneur inferieure à 10% en masse, de préférence inferieure à 5% en masse, voire même que ces composés ne sont plus détectables et que leur teneur peut être alors considérée comme nulle. Le composés organiques à détruire sont dans le procédé transformés en molécules de plus petite taille dont la nocivité, toxicité, dangerosité est inférieure à celle des composés à détruire initialement présents dans la charge, voire dont la toxicité, nocivité peut être considérée comme nulle.

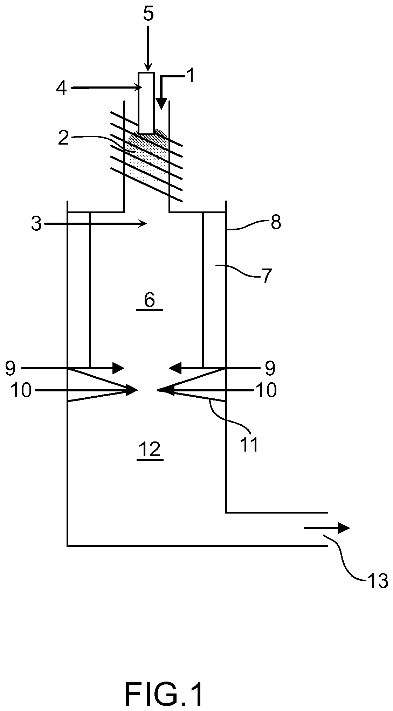

La figure 6 illustre un dispositif pour la mise en oeuvre du procédé selon l'invention dans un mode de réalisation où le gaz plasmagène est constitué par de l'oxygène pur. Le dispositif de cette figure est sensiblement analogue à celui de la figure 1 (les mêmes signes de référence sont utilisés), à la différence cependant que de l'oxygène est utilisé comme gaz plasmagène et est introduit dans le réacteur par la canalisation (1) débouchant dans la torche à plasma, et que seule la charge à traiter (5) est introduite dans le plasma et non un mélange de la charge et d'eau. En outre, avantageusement, le système d'introduction (4) du dispositif de la figure 1 peut éventuellement être remplacé dans le dispositif selon l'invention par une canne d'introduction spécifique (14), et/ou le venturi (11) du dispositif de la figure 1 peut être supprimé et remplacé par une couronne de distribution de gaz pour injecter de l'air et/ou de l'oxygène (15) vers le centre du réacteur comme cela est décrit plus en détail plus bas.

La figure 7 illustre un dispositif pour la mise en oeuvre du procédé selon l'invention dans un mode de réalisation dans lequel le gaz plasmagène n'est pas de l'oxygène pur, ou dans lequel le (les) gaz plasmagène(s) ne comprend (comprennent) pas d'oxygène ou comprend (comprennent) peu d'oxygène.

Il est donc alors nécessaire de prévoir un apport d'oxygène qui peut se faire en amenant directement le gaz au coeur du réacteur ou en l'amenant simultanément et conjointement à la charge par exemple liquide ou gazeuse à traiter. Dans le premier cas, et comme cela est représenté sur la figure 7, un piquage de type traditionnel (16) permet d'assurer l'arrivée de l'oxygène dans le réacteur au plus près du plasma ou dans le plasma, tandis qu'une autre canalisation séparée (1) permet l'introduction d'un gaz plasmagène dans la torche à plasma. Pour le reste, le dispositif de la figure 7 est sensiblement analogue à celui de la figure 6.

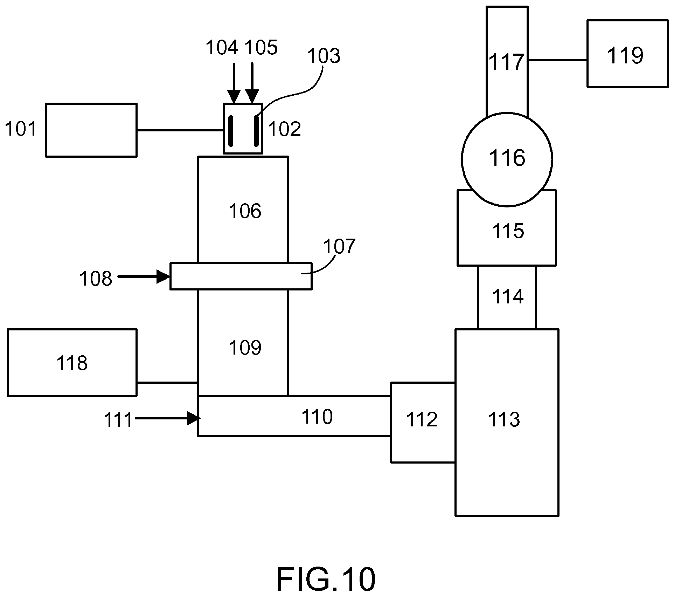

La figure 10 montre l'ensemble d'un dispositif pour la mise en oeuvre du procédé selon l'invention.

De l'amont vers l'aval, l'installation est équipée d'une torche à plasma d'induction (102) alimentée par un générateur électrique (101) branché sur le secteur (380V/50Hz) qui délivre un courant haute fréquence adapté à la géométrie de la torche (102).

L'alimentation de la torche (102) par le générateur (101), se fait généralement par l'intermédiaire d'un tableau de commande (non représenté).

Le démarrage de la torche (102) est assuré à pression atmosphérique par la mise en place de filaments de tungstène (103) dans la torche (102) qui, lorsqu'ils sont soumis au champ électromagnétique haute fréquence, initient le plasma.

Dans le cas d'un plasma d'oxygène, le démarrage pourra se faire selon d'autres moyens évitant l'oxydation des électrodes.

La torche (102) est généralement constituée d'une spire, généralement refroidie à l'air qui est alimentée en oxygène grâce à des arrivées adéquates (104) et qui est alimentée en charge par des moyens appropriés (105) qui introduisent la charge au sein du plasma.

De préférence et notamment dans le cas où la charge est liquide, les moyens d'introduction de la charge dans le plasma sont constitués par une canne spécifique d'introduction de liquides au coeur du plasma.

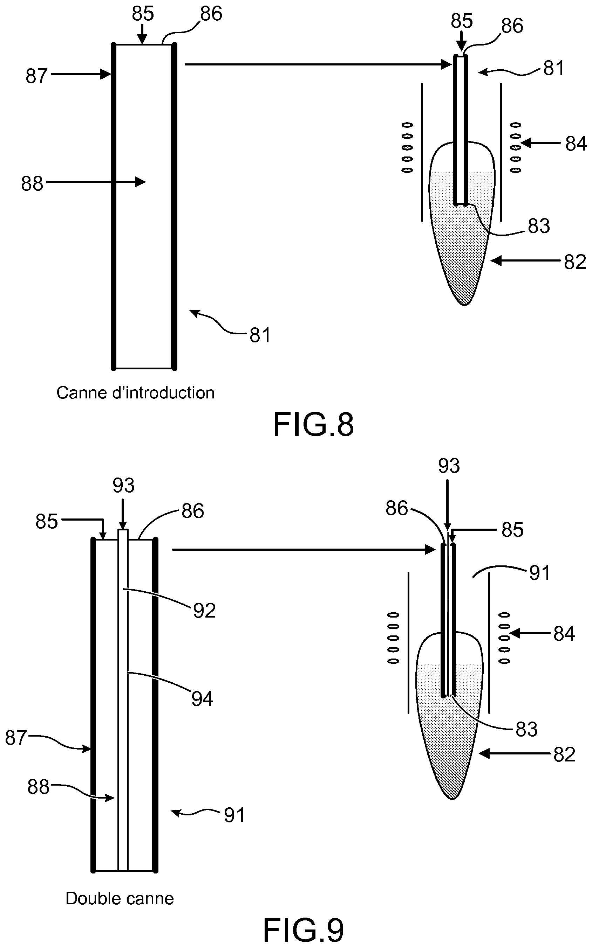

Cette canne spécifique est représentée plus en détails sur la figure 8.

En effet, un plasma est un milieu visqueux dans lequel il est difficile d'introduire des fluides.

La canne (81) plonge au coeur du plasma (82) pour déboucher (83) dans la partie inferieure de la spire inductive (84) où la charge (85) envoyée par le sommet (86) de la canne est ainsi introduite.

Si l'on se réfère à la figure 8, cette canne est constituée :
- d'un tube (87) en matériau réfractaire tel que l'alumine qui assure la structure mécanique ;
- d'un garnissage ou mèche (88) constitué par un textile en fibres d'un matériau réfractaire tel qu'un verre, l'alumine, ou la zircone dans lequel la charge (85) généralement fluide est introduite par l'une des extrémités de la canne, qui est généralement son extrémité supérieure (86) du fait que la canne est généralement disposée verticalement.

Dans cette structure, le garnissage textile en fibres (88) empêche la formation de gouttes tombant à travers le plasma (82). Il assure, par imprégnation capillaire, un débit régulier.

Lorsque le fluide est un liquide, les hautes températures atteintes par la canne dans sa partie médiane assurent sa vaporisation et la matière organique est essentiellement traitée sous forme gazeuse.

Toutefois, cette canne peut aussi être utilisée avec des fluides qui ne sont pas liquides.

Comme on l'a déjà indiqué plus haut, l'apport, l'alimentation en oxygène peut se faire de plusieurs manières. Ainsi, dans le cas où le gaz plasmagène est constitué par de l'oxygène, alors l'apport en oxygène est naturellement constitué par l'alimentation en ce gaz plasmagène (figure 6).

Ou bien, si le gaz plasmagène ne comprend pas d'oxygène ou peu d'oxygène, alors l'apport, l'alimentation en oxygène peut se faire en amenant directement l'oxygène gazeux au coeur du réacteur ou en l'amenant conjointement à la charge.

Dans le premier cas, un piquage de type traditionnel assure l'arrivée de l'oxygène dans la torche qui produit le plasma (figure 7).

La charge est amenée dans le plasma par la canne décrite sur la figure 8.

Dans le second cas, l'oxygène peut être amené par l'intermédiaire de la canne décrite ci-dessus et sur la figure 8, cette canne étant modifiée pour permettre le passage de l'oxygène.

Cette canne modifiée ou double canne (91) est présentée sur la figure 9.

Comme l'oxygène ne peut pas être mélangé aux composés organiques de la charge avant leur arrivée dans le réacteur pour des raisons de sécurité, un tube généralement un tube capillaire (92) peut être mis en place au centre de la canne (91) qui conserve son garnissage textile ou fibreux (88) décrit plus haut. L'oxygène (93) est alors introduit dans le capillaire (92) alors que la charge (85) comprenant les composés organiques est introduite par l'une des extrémités de la canne, généralement son extrémité supérieure (86) à la périphérie dans l'espace annulaire défini entre la paroi (94) du tube amenant l'oxygène et la paroi (87) de la canne.

Le plasma formé dans la torche à plasma (102) brûle dans un réacteur ou enceinte de réaction (106) .

Cette chambre de réaction (106) comporte généralement une double paroi dans laquelle circule de l'eau de refroidissement. Cette double paroi peut être en acier. La surface intérieure de la double paroi est recouverte d'un matériau réfractaire de protection.

Les parois externes du réacteur sont généralement refroidies par circulation d'eau.

Les espèces chimiques issues du plasma s'oxydent dans le réacteur, enceinte de réaction, (106) grâce à l'oxygène introduit dans la torche (102) notamment lorsque de l'oxygène pur est utilisé en tant que gaz plasmagène. La chambre de réaction a pour fonction de confiner la chaleur produite dans la torche plasma pour permettre ainsi la destruction complète des déchets. Les gaz issus de cette enceinte de réaction peuvent ainsi atteindre une température supérieure à 1500°C.

La chambre de réaction généralement une forme de cylindre vertical au sommet duquel est disposée la torche à plasma. Les parois de l'enceinte de réaction sont généralement isolées thermiquement par un matériau réfractaire.

Ladite oxydation est favorisée à l'aide d'un dispositif de brassage (107) tel qu'un venturi, situé à la partie inférieure de l'enceinte de réaction. Une introduction en gaz comburant par exemple en air et/ou en d'oxygène (108) peut être prévue au niveau de ce dispositif.

Dans le cas où le dispositif de brassage est un venturi, il y a toujours une introduction d'air et/ou d'oxygène dans le dispositif de brassage.

Si le venturi est supprimé, on ne conserve qu'une introduction d'air et/ou d'oxygène à l'aide d'une couronne de distribution.

La structure du venturi est décrite en détail dans le document [8] à la description duquel on pourra se référer.

Le venturi grâce à une alimentation en gaz comburant tel que de l'air et/ou de l'oxygène permet de générer une seconde combustion ou postcombustion entre ce comburant et les gaz issus de l'enceinte de réaction. Ce dispositif permet ainsi de détruire les composés, notamment les composés toxiques qui auraient pu échapper au premier stade de destruction dans l'enceinte de réaction (106).

En d'autres termes, le venturi a pour objet de générer une turbulence importante des gaz de réaction issus de la chambre de réaction (106) grâce à un apport d'air et/ou d'oxygène froid (108). Ce mélange de gaz, constitué d'air et/ou d'oxygène froid et des produits de réaction, permet, sans apport de chaleur supplémentaire, de générer une postcombustion des gaz issus de la chambre de réaction. On peut ainsi achever la destruction des éventuels gaz réactifs qui n'ont pas été transformés dans la chambre de réaction (106). Dans le venturi, les différentes espèces gazeuses telles que H₂, CO, C... vont réagir avec l'air selon la réaction suivante :

*CO + H₂ + O₂* → *CO₂ + H₂O*

Le gaz nocif CO est ainsi transformé en un gaz moins nocif.

On peut dire que le venturi assure notamment un brassage pour améliorer les vitesses de recombinaison et un refroidissement par ajout d'air et/ou d'oxygène (108).

Dans le cas où le fluide comporte des charges minérales, le venturi est supprimé, l'introduction d'air assure également une trempe des gaz et des particules s'y trouvant.

La géométrie du réacteur, enceinte de réaction peut être modifiée, au niveau du dispositif de brassage (107), pour permettre au réacteur d'accepter plus facilement les charges minérales.

En effet, le procédé est généralement dédié au traitement de fluides dépourvus de charges minérales.

Cependant, par exemple, le traitement de solvants usagés ayant servi à dissoudre des matières contenant des minéraux aboutit à la concentration de ces charges minérales sous la forme de particules susceptibles de former des dépôts.

La présence du venturi, présent pour assurer un brassage important des gaz risque d'être à l'origine de la formation de dépôts et de bouchon. C'est la raison pour laquelle, le traitement de liquides chargés en minéraux devra de préférence être réalisé avec un réacteur de conception différente.

Dans ce mode de réalisation, le venturi est éliminé afin d'éviter les dépôts intempestifs à son niveau. Il est remplacé par une couronne de distribution de gaz, par exemple d'air pouvant être enrichi en oxygène. Cette dernière injecte de l'air et/ou de l'oxygène vers l'axe du réacteur (qui se présente généralement sous la forme d'un cylindre vertical) dans une direction pouvant être inclinée vers le haut. Cette inclinaison dépendra de la géométrie du réacteur et de la puissance de la torche à plasma utilisée. Elle pourra aller de 0° à 70° par rapport à l'horizontale selon le cas.

Le gaz dont la pression d'injection pourra être modulée selon la géométrie du réacteur et la puissance du plasma aura pour fonction de créer une zone de rupture dans l'écoulement et imposer la turbulence nécessaire à un bon mélange. Il assurera également la trempe des gaz et des particules liquides pouvant s'y trouver afin de limiter la formation de dépôts cohérents susceptibles de dégrader le fonctionnement du procédé. La couronne de distribution de gaz assure une postcombustion comme c'est le cas dans le venturi.

Le traitement de liquides pouvant contenir des charges minérales doit impliquer une étape de filtration en aval du réacteur. Un filtre (112) devra donc être introduit dans la chaîne de traitement des gaz.

Cette configuration du réacteur avec une couronne de distribution des gaz est montrée sur les figures 6 et 7. Le filtre supplémentaire n'est pas représenté mais est inclus dans le traitement des gaz.

En aval de ce dispositif de brassage (107), les gaz pénètrent dans un refroidisseur (109) qui amène les gaz à une température compatible avec le dispositif de traitement disposé en aval.

Ce refroidisseur (109) permet également aux gaz de finir leur processus de recombinaison qui a déjà commencé dans le venturi. Par recombinaison, on entend que les composés organiques qui ont été détruits dans le plasma, oxydés par l'oxygène, sont recombinés en petites molécules formant un gaz qui peut généralement être rejeté dans l'atmosphère après traitement, par exemple, traitement de neutralisation pour éliminer certaines espèces telles que HCl ou Cl₂.

Ce refroidisseur (109) que l'on peut aussi appeler espace de recombinaison consiste généralement en une chambre à double paroi refroidie par eau. Dans cet espace, la température des gaz chute rapidement pour atteindre par exemple 200°C en sortie. Au contraire de l'enceinte de réaction (106), l'espace de recombinaison n'est pas isolé thermiquement et sa double paroi est refroidie par circulation d'eau issue d'une centrale de refroidissement. Dans cet espace, les gaz s'écoulent et se refroidissent par convection naturelle près des parois.

A la sortie du refroidisseur, ou espace de recombinaison (109), les gaz sont analysés par exemple par spectrométrie de masse ou par spectroscopie infrarouge (118). Cette analyse permet de vérifier l'efficacité du traitement thermique et de connaître la composition des gaz après ce traitement thermique, mais l'analyse permet surtout de savoir si les gaz doivent en outre subir au moins un traitement chimique.

La température des gaz peut être ajustée par une pulvérisation d'eau (111) à l'entrée d'une « manchette » (110) avant que les gaz ne soient dirigés vers l'installation de traitement des gaz (113). On peut ainsi abaisser la température des gaz en cas d'excès de chaleur notamment pour protéger le système de neutralisation des halogènes.

Cette installation de traitement des gaz (113) est adaptée en fonction des composés que l'on doit traiter. Dans cette installation, on peut réaliser un ou plusieurs traitement(s) chimique(s) des gaz choisis, par exemple, parmi un traitement de déshalogénation ou élimination des halogènes, un traitement d'élimination des oxydes d'azote, et un traitement de désulfuration

En général, l'installation de traitement des gaz (113) pourra ainsi comprendre une unité de neutralisation des halogènes, et/ou un système dit « DENOX » permettant la dénitrification catalytique des gaz notamment dans le cas où le gaz plasmagène comprend de l'azote et/ou éventuellement une unité de désulfuration.

La neutralisation des halogènes présents sous forme de HCl ou de Chlore gazeux s'effectue généralement par un lavage classique par pulvérisation d'eau sodée suivant la réaction suivante :

*HCl + NaOH* → *NaCl + H₂O,*

ou suivant la réaction suivante :

*Cl₂ + 2 NaOH → NaCl + NaClO + H₂O*

La dénitrification des oxydes d'azote s'effectue par exemple par réaction avec de l'ammoniac :

*NO + NO₂ + 2NH₃ → 2N₂ + 3H₂O*

*4NO + 4NH₃ + O₂ → 4N₂ + 6H₂O*

*2NO₂ + 4NH₃ + O₂ → 3N₂ + 6H₂O*

Dans le cas où les effluents sont chargés en minéraux, ces gaz, comme on l'a déjà précisé plus haut, transitent par un filtre placé en amont (112) du système de lavage (113).

Lorsque les effluents sont radioactifs, ce filtre (112) sera de type THE (« Très Haute Efficacité »).

Ce type de filtre est couramment distribué dans le commerce.

Une fois lavés, les gaz passent à travers un condenseur dévésiculeur (114) qui permet de limiter le transport de liquide vers l'élément (116) et la cheminée (117).

Les gaz circulent dans l'installation de l'amont vers l'aval grâce à un extracteur (115) maintenant une faible dépression dans le système.

Des moyens d'analyse (118, 119) en ligne, par exemple de type spectroscopie infrarouge ou spectrométrie de masse assurent un contrôle de la qualité des gaz à la sortie du refroidisseur (109) et au niveau de la cheminée (117) afin de déterminer chaque fois si les gaz peuvent être rejetés dans l'atmosphère.

Enfin, il est à noter que plusieurs torches à plasma peuvent être placées sur un même réacteur. Cette disposition peut permettre de traiter des débits importants de fluides et/ou de traiter simultanément différents fluides immiscibles ou chimiquement incompatibles.

En outre, le dispositif selon l'invention peut être un dispositif mobile, capable d'être placé sur un véhicule.

### RÉFÉRENCES

**[1]** US-A-4438706
**[2]** US-A-4479443
**[3]** US-A-4644877
**[4]** US-A-4886001
**[5]** US-A-5505909
**[6]** US-A-5288969
**[7]** FR-A-2765322
**[8]** FR-A-2866414

## Revendications

1. Procédé de destruction thermique d'au moins une charge (5) comprenant au moins un composé organique par au moins un plasma d'induction (3) formé par au moins un gaz plasmagène (1) ionisé par un inducteur (2), dans lequel on réalise les étapes successives suivantes :
a) on introduit (4,14,105) ladite charge (5) dans le plasma et on réalise un apport d'oxygène gazeux (16) dans le au moins un gaz plasmagène (1), et/ou dans le plasma (3) ou au voisinage du plasma (3), moyennant quoi on obtient des gaz dans lesquels une décomposition en éléments atomiques a été induite ;
b) on réalise, dans une enceinte de réaction (6,106), une première opération de destruction thermique desdits gaz dans lesquels une décomposition en éléments atomiques a été induite ;
c) on réalise une deuxième opération de destruction thermique des gaz ayant subi la première opération de destruction thermique par brassage (11,107) desdits gaz avec de l'air et/ou de l'oxygène (9,10,15,108) ;
d) on réalise une recombinaison (12,109) par refroidissement d'au moins une partie des gaz issus du brassage ;
e) on rejette les gaz (13).

2. Procédé selon la revendication 1, dans lequel l'apport d'oxygène gazeux est réalisé en utilisant de l'oxygène pur en tant que seul gaz plasmagène.

3. Procédé selon la revendication 1, dans lequel le ou les gaz plasmagène(s) n'est (ne sont) pas constitué(s) par de l'oxygène, ne comprend (comprennent) pas d'oxygène, ou comprend (comprennent) peu d'oxygène, et l'apport d'oxygène gazeux est réalisé en amenant de l'oxygène gazeux dans le plasma ou au voisinage du plasma.

4. Procédé selon la revendication 3, dans lequel l'apport d'oxygène gazeux est réalisé en introduisant l'oxygène gazeux dans le plasma à un emplacement identique ou proche de l'emplacement où est introduite la charge et simultanément à celle-ci.

5. Procédé selon la revendication 3 ou 4, dans lequel le rapport en mole de l'oxygène gazeux apporté au(x) composé(s) organique(s) est supérieur au rapport stoechiométrique de combustion.

6. Procédé selon l'une quelconque des revendications précédentes, dans lequel dans l'étape c), le brassage est réalisé par un dispositif venturi (11,107) dans lequel est injecté de l'air et/ou de l'oxygène gazeux (9,10,108).

7. Procédé selon l'une quelconque des revendications 1 à 5, dans lequel, notamment dans le cas où la charge contient en outre au moins une charge minérale, dans l'étape c), le brassage est réalisé par une couronne de distribution d'air et/ou d'oxygène qui injecte de l'air et/ou de l'oxygène gazeux (15) vers l'axe principal de l'enceinte de réaction.

8. Procédé selon l'une quelconque des revendications précédentes, dans lequel à l'issue de l'étape d) est prévue au moins une étape d1) (113) de traitement chimique des gaz.

9. Procédé selon la revendication 8, dans lequel ladite au moins une étape d1) (113) de traitement chimique des gaz est choisie parmi une déshalogénisation ou neutralisation, une désoxydation des oxydes d'azote, et une désulfuration.

10. Procédé selon la revendication 8 ou la revendication 9, dans lequel la charge contient en outre au moins une charge minérale et une étape de filtration des gaz (112) est prévue après l'étape d) et avant l'étape d1).

11. Procédé selon l'une quelconque des revendications 8 à 10, dans lequel à l'issue de l'étape de traitement chimique des gaz d1) les gaz sont traités dans un condenseur dévésiculeur (114).

12. Procédé selon l'une quelconque des revendications précédentes, dans lequel plusieurs charges identiques ou différentes sont traitées par plusieurs plasmas.

13. Dispositif de destruction d'au moins une charge (5) comprenant au moins un composé organique par au moins un plasma d'induction (3) formé par au moins un gaz plasmagène (1) ionisé par un inducteur (2), comprenant :
- au moins une torche plasma inductive (102) ;
- des moyens d'introduction d'au moins un gaz plasmagène dans ladite torche ;
- des moyens pour amener de l'oxygène gazeux dans le plasma ou au voisinage du plasma ;
- des moyens d'introduction (4,14,105) de ladite charge dans ladite torche ;
- une enceinte de réaction (6,106) apte à permettre une destruction thermique des gaz sortant de la torche plasma inductive ;
- un dispositif (11,107) permettant de réaliser un brassage des gaz sortant de l'enceinte de réaction (6,106) ;
- des moyens d'introduction d'air et/ou d'oxygène gazeux (9,10,15,108) dans le dispositif de brassage (11,107) ;
- un dispositif (12) permettant de recombiner par refroidissement au moins une partie des gaz issus du dispositif de brassage (11,107) ;
la torche inductive, l'enceinte de réaction (6,106), le dispositif de brassage (11,107), et le dispositif de recombinaison (12,109) étant en communication fluidique.

14. Dispositif selon la revendication 13, dans lequel les moyens d'introduction de la charge dans la torche sont constitués par un tube en un matériau réfractaire (87) dont l'intérieur est garni d'un textile en fibres d'un matériau réfractaire (88).

15. Dispositif selon la revendication 14, dans lequel ledit tube en un matériau réfractaire comporte en outre en son centre un tube (92) pour amener de l'oxygène gazeux dans le plasma.

16. Dispositif de destruction thermique selon l'une quelconque des revendications 13 à 15, dans lequel le dispositif (107) permettant de réaliser un brassage de gaz est un venturi (11).

17. Dispositif de destruction thermique selon l'une quelconque des revendications 13 à 15, dans lequel le dispositif permettant de réaliser un brassage de gaz est une couronne de distribution qui est apte à injecter de l'air et/ou de l'oxygène (15) vers l'axe principal de l'enceinte de réaction.

18. Dispositif de destruction thermique selon l'une quelconque des revendications 13 à 17, **caractérisé en ce qu'**il comprend en outre, situé en aval du dispositif de recombinaison de gaz dans le sens de la circulation des gaz, au moins un dispositif (113) permettant de traiter chimiquement les gaz issus du dispositif de recombinaison (12,109).

19. Dispositif de destruction thermique selon la revendication 18, **caractérisé en ce que** le au moins un dispositif (113) permettant de traiter chimiquement les gaz issus du dispositif de recombinaison réalise au moins une réaction choisie parmi une déhalogénisation, une désoxydation des oxydes d'azote (16) et une désulfuration.

20. Dispositif selon l'une quelconque des revendications 18 à 19, **caractérisé en ce qu'**il comprend en outre des moyens de filtration (112) en aval du dispositif de recombinaison de gaz dans le sens de la circulation des gaz, et en amont du au moins un dispositif (113) permettant de traiter chimiquement les gaz issus du dispositif de recombinaison (109).

21. Dispositif selon l'une quelconque des revendications 13 à 20, qui comprend plusieurs torches à plasma.

22. Dispositif selon l'une quelconque des revendications 13 à 21, **caractérisé en ce que** ce dispositif est un dispositif mobile, capable d'être placé sur un véhicule.

## Patentansprüche

1. Verfahren zur thermischen Zerstörung zumindest einer Charge (5) enthaltend zumindest einer organischen Verbindung durch zumindest ein Induktionsplasma (3), das aus zumindest einem mit einem Induktor (2) ionisierten, plasmabildenen Gas (1) gebildet ist, wobei die nachstehenden, aufeinanderfolgenden Schritte durchgeführt werden:
a) Einführen (4, 14, 105) der genannten Charge (5) in das Plasma und Zuführen von gasförmigem Sauerstoff (16) in das zumindest eine plasmabildende Gas (1) und/oder in das Plasma (3) oder in die Nähe des Plasmas (3), wodurch Gase erhalten werden, bei denen eine Zersetzung in atomare Elemente ausgelöst wurde;
b) Durchführen eines ersten thermischen Zerstörungsvorgangs der genannten Gase bei denen eine Zersetzung in atomare Elemente ausgelöst wurde, in einem Reaktionsbehälter (6, 106);
c) Durchführen eines zweiten thermischen Zerstörungsvorgangs der Gase, die dem ersten thermischen Zerstörungsvorgang unterworfen wurden, durch Durchmischen (11, 107) der genannten Gase mit Luft und/oder mit Sauerstoff (9, 10, 15, 108);
d) Rekombinieren (12, 109) durch Abkühlen zumindest eines Teils der aus der Durchmischung stammenden Gase;
e) Entsorgen der Gase (13).

2. Verfahren nach Anspruch 1, wobei die Zufuhr von gasförmigem Sauerstoff unter Verwendung von reinem Sauerstoff als einziges plasmabildendes Gas erfolgt.

3. Verfahren nach Anspruch 1, wobei das bzw. die plasmabildenden Gase nicht aus Sauerstoff besteht/bestehen, kein Sauerstoff enthält/enthalten oder wenig Sauerstoff enthält/enthalten, und die Zufuhr von gasförmigem Sauerstoff unter Einleiten von gasförmigem Sauerstoff in das Plasma oder in die Nähe des Plasmas erfolgt.

4. Verfahren nach Anspruch 3, wobei die Zufuhr von gasförmigem Sauerstoff unter Einführen von gasförmigem Sauerstoff in das Plasma an einer Stelle, die identisch zu der Stelle ist oder nahe bei dieser liegt, wo die Charge eingeführt wird, und gleichzeitig mit dieser erfolgt.

5. Verfahren nach Anspruch 3 oder 4, wobei das Molverhältnis des zugeführten gasförmigen Sauerstoffs zu der bzw. den organischen Verbindungen höher als das stöchiometrische Verbrennungsverhältnis ist.

6. Verfahren nach einem der vorangehenden Ansprüche, wobei in Schritt c), das Durchmischen mit einer Venturi-Einrichtung (11, 107) erfolgt, in die Luft und/oder gasförmiger Sauerstoff (9, 10, 108) eingeleitet wird.

7. Verfahren nach einem der Ansprüche 1 bis 5, wobei insbesondere in dem Falle, dass die Charge ferner zumindest eine mineralische Charge enthält, in Schritt c) das Durchmischen mit einem Luft- und/oder Sauerstoff-Verteilerkranz erfolgt, der Luft und/oder gasförmigen Sauerstoff (15) zur Hauptachse des Reaktionsbehälters einleitet.

8. Verfahren nach einem der vorangehenden Ansprüche, wobei am Ende von Schritt d) zumindest ein Schritt d1) (113) der chemischen Behandlung der Gase vorgesehen ist.

9. Verfahren nach Anspruch 8, wobei der zumindest eine Schritt d1) (113) der chemischen Behandlung der Gase ausgewählt ist aus Dehalogenierung oder Neutralisierung, Desoxidation von Stickstoffoxiden und Entschwefelung.

10. Verfahren nach Anspruch 8 oder Anspruch 9, wobei die Charge ferner zumindest eine mineralische Charge enthält und ein Schritt des Filterns der Gase (112) nach Schritt d) und vor Schritt d1) vorgesehen ist.

11. Verfahren nach einem der Ansprüche 8 bis 10, wobei am Ende von dem Schritt der chemischen Behandlung der Gase d1) die Gase in einem Tropfenabscheiderkondensator (114) behandelt werden.

12. Verfahren nach einem der vorangehenden Ansprüche, wobei mehrere identische oder unterschiedliche Chargen mit mehreren Plasmen behandelt werden.

13. Vorrichtung zum Zerstören zumindest einer Charge (5), die zumindest eine organische Verbindung enthält, mit zumindest einem Induktionsplasma (3), das aus zumindest einem mit einem Induktor (2) ionisierten plasmabildenen Gas (1) gebildet ist, enthaltend:
- zumindest einen induktiven Plasmabrenner (102),
- Mittel zum Einführen von zumindest einem plasmabildenen Gas in den Brenner,
- Mittel zum Einbringen von gasförmigem Sauerstoff in das Plasma oder in die Nähe des Plasmas;
- Mittel zum Einführen (4, 104, 105) der Charge in den Brenner;
- einen Reaktionsbehälter (6, 106), der dazu geeignet ist, eine thermische Zerstörung der aus dem induktiven Plasmabrenner austretenden Gase zu gestatten;
- eine Einrichtung (11, 107), die ein Durchmischen der aus dem Reaktionsbehälter (6, 106) austretenden Gase gestattet;
- Mittel zum Einführen von Luft und/oder gasförmigem Sauerstoff (9, 10, 15, 108) in die Durchmischungseinrichtung (11, 107);
- eine Einrichtung (12), die gestattet, zumindest einen Teil der aus der Durchmischungseinrichtung (11, 107) stammenden Gase durch Abkühlen zu rekombinieren;
wobei der induktive Brenner, der Reaktionsbehälter (6, 106), die Durchmischungseinrichtung (11, 107) und die Rekombinationseinrichtung (12, 109) in Strömungsverbindung stehen.

14. Vorrichtung nach Anspruch 13, wobei die Mittel zum Einführen der Charge in den Brenner aus einem Rohr aus feuerfestem Material (87) bestehen, dessen Innenraum mit einem Fasertextil aus feuerfestem Material (88) ausgekleidet ist.

15. Vorrichtung nach Anspruch 14, wobei das Rohr aus feuerfestem Material ferner in seiner Mitte ein Rohr (92) zum Einleiten von gasförmigem Sauerstoff in das Plasma enthält.

16. Vorrichtung zur thermischen Zerstörung nach einem der Ansprüche 13 bis 15, wobei die Einrichtung (107), die das Durchmischen von Gasen gestattet, eine Venturi-Einrichtung (11) ist.

17. Vorrichtung zur thermischen Zerstörung nach einem der Ansprüche 13 bis 15, wobei die Einrichtung, die das Durchmischen von Gasen gestattet, ein Verteilerkranz ist, der dazu geeignet ist, Luft und/oder Sauerstoff (15) zur Hauptachse des Reaktionsbehälters einzuleiten.

18. Vorrichtung zur thermischen Zerstörung nach einem der Ansprüche 13 bis 17, **dadurch gekennzeichnet, dass** sie ferner in Gasströmungsrichtung der Einrichtung zur Rekombination von Gasen nachgelagert zumindest eine Einrichtung (113) enthält, die die chemische Behandlung der aus der Rekombinationseinrichtung (12, 109) stammenden Gase gestattet.

19. Vorrichtung zur thermischen Zerstörung nach Anspruch 18, **dadurch gekennzeichnet, dass** die zumindest eine Einrichtung (113), die die chemische Behandlung der aus der Rekombinationseinrichtung stammenden Gase gestattet, zumindest eine Reaktion, ausgewählt aus Dehalogenierung, Desoxidation von Stickstoffoxiden (16) und Entschwefelung, bewirkt.

20. Vorrichtung nach einem der Ansprüche 18 bis 19, **dadurch gekennzeichnet, dass** sie ferner zumindest Filtermittel (112) enthält, die in Gasströmungsrichtung der Einrichtung zur Rekombination von Gasen nachgelagert und der zumindest einen Einrichtung (113) zur chemischen Behandlung der aus der Rekombinationseinrichtung (109) stammenden Gase vorgelagert sind.

21. Vorrichtung nach einem der Ansprüche 13 ä 20, die mehrere Plasmabrenner enthält.

22. Vorrichtung nach einem der Ansprüche 13 bis 21, **dadurch gekennzeichnet, dass** diese Vorrichtung eine bewegliche Vorrichtung ist, die auf ein Fahrzeug gestellt werden kann.

## Claims

1. A method for thermal destruction of at least one feed (5) comprising at least one organic compound by at least one induction plasma (3) formed by at least one plasma-forming gas (1) ionized by an inductor (2), wherein the following successive steps are carried out:
a) said feed (5) is introduced (4, 14, 105) into the plasma and a supply of oxygen gas (16) is achieved in said at least one plasma-forming gas (1), and/or in the plasma (3) or in the vicinity of the plasma (3), by means of which gases are obtained in which decomposition into atomic elements has been induced;
b) in a reaction enclosure (6, 106), a first operation for thermal destruction of said gases in which decomposition into atomic elements has been induced, is carried out;
c) a second operation for thermal destruction of the gases having undergone the first operation for thermal destruction is carried out, by mixing (11, 107) said gases with air and/or with oxygen (9, 10, 15, 108);
d) a recombination (12, 109) is achieved by cooling at least one portion of the gases from the mixing;
e) the gases (13) are discharged.

2. The method according to claim 1, wherein the supply of oxygen gas is achieved by using pure oxygen as a single plasma-forming gas.

3. The method according to claim 1, wherein the plasma-forming gas(es) is(are) not consisting of oxygen, does (do) not comprise oxygen, or comprise(s) little oxygen, and the supply of oxygen gas is achieved by bringing oxygen gas into the plasma or into the vicinity of the plasma.

4. The method according to claim 3, wherein the supply of oxygen gas is achieved by introducing oxygen gas into the plasma at a location identical or close to the location where the feed is introduced and simultaneously with the latter.

5. The method according to claim 3 or 4, wherein the molar ratio of the oxygen gas supplied to the organic compound(s) is greater than the stoichiometric combustion ratio.

6. The method according to any one of the preceding claims, wherein in step c) the mixing is achieved with a venturi device (11, 107) into which air and/or oxygen gas (9, 10, 108) is injected.

7. The method according to any one of claims 1 to 5, wherein, notably in the case when the feed further contains at least one mineral filler, in step c), mixing is achieved by an air and/or oxygen distribution crown which injects air and/or oxygen gas (15) towards the main axis of the reaction enclosure.

8. The method according to any one of the preceding claims, wherein at the end of step d) at least one step d1) (113) is provided for chemical treatment of the gases.

9. The method according to claim 8, wherein said at least one step d1) (113) for chemical treatment of the gases is selected from a dehalogenation or neutralization step, a step for deoxidation of nitrogen oxides, and a desulfuration step.

10. The method according to claim 8 or claim 9, wherein the feed further contains at least one mineral filler and a gas filtering step (112) is provided after step d) and before step d1).

11. The method according to any one of claims 8 to 10, wherein at the end of the step for chemical treatment of the gases d1), the gases are treated in a droplet catcher condenser (114).

12. The method according to any one of the preceding claims, wherein several identical or different feeds are treated with several plasmas.

13. A device for destruction of at least one feed (5) comprising at least one organic compound by at least one induction plasma (3) formed by at least one plasma-forming gas (1) ionized by an inductor (2), comprising:
- at least one inductive plasma torch (102);
- means for introducing at least one plasma-forming gas into said torch;
- means for bringing oxygen gas into the plasma or into the vicinity of the plasma;
- means (4, 14, 105) for introducing said feed into said torch;
- a reaction enclosure (6, 106) capable of allowing thermal destruction of the gases flowing out of the inductive plasma torch ;
- a device (11, 107) allowing mixing of the gases flowing out of the reaction enclosure (6, 106) to be carried out;
- means for introducing air and/or oxygen gas (9, 10, 15, 108) into the mixing device (11, 107);
- a device (12) allowing recombination by cooling of at least one portion of the gases from the mixing device (11, 107);
the inductive torch, the reaction enclosure (6, 106), the mixing device (11, 107) and the recombination device (12, 109) being in fluid communication.

14. The device according to claim 13, wherein the means for introducing the feed into the torch consist of a tube made of a refractory material (87), the inside of which is packed with a textile made of fibers of a refractory material (88).

15. The device according to claim 14, wherein said tube made of a refractory material further comprises in its center a tube (92) for bringing oxygen gas into the plasma.

16. The thermal destruction device according to any one of claims 13 to 15, wherein the device (107) allowing mixing of the gases to be achieved is a venturi (11).

17. The thermal destruction device according to any one of claims 13 to 15, wherein the device allowing mixing of the gases to be carried out is a distribution crown which is capable of injecting air and/or oxygen (15) towards the main axis of the reaction enclosure.

18. The thermal destruction device according to any one of claims 13 to 17, **characterized in that** it further comprises, located downstream from the gas recombination device in the direction of the circulation of the gases, at least one device (113) allowing chemical treatment of the gases from the recombination device (12, 109).

19. The thermal destruction device according to claim 18, **characterized in that** said at least one device (113) allowing chemical treatment of the gases from the recombination device, achieves at least one reaction selected from a dehalogenation, a deoxidation of nitrogen oxides (16) and a desulfuration.

20. The device according to any one of claims 18 to 19, **characterized in that** it further comprises filtering means (112) downstream from the gas recombination device in the direction of the circulation of the gases, and upstream from said at least one device (113) allowing chemical treatment of the gases from the recombination device (109).

21. The device according to any one of claims 13 to 20, which comprises several plasma torches.

22. The device according to any one of claims 13 to 21, **characterized in that** said device is a mobile device, capable of being placed on a vehicle.
